# EUROPEAN PATENT APPLICATION

(11) **EP 2 738 541 A2**
(43) Date of publication of application: **04.06.2014**
(21) Application number: 13194456.3
(22) Date of filing: 26.11.2013
(51) Int. Cl.: G01N 15/14

(54) **Display device and display method for scattergram relating to blood cells, and blood analyzer having said display device**

(30) Priority: 28.11.2012 JP 2012260401
(71) Applicant: HORIBA, Ltd., Kyoto 601-8510 (JP)
(72) Inventor: Nishimori, Masashi, Kyoto, 601-8510 (JP); Nakajima, Kyosuke, Kyoto, 601-8510 (JP); Fujiwara, Shingo, Kyoto, 601-8510 (JP)
(74) Representative: Isarpatent

(57) **Abstract**

The display device is composed of at least of a data processor 1 and a display 2. The blood analyzer is composed of the display device. The display method is performed using the display device. The data processor 1 is composed to define a display-condition range corresponding to the range between the lowest frequency and the highest frequency in the frequencies of respective dots in the data set, so that a user can input a display-condition value through an input means (4, 5). Then, a dot having a frequency not less than a frequency corresponding to the input display-condition value is displayed as a scattergram 3 on the display 2. As a result, the user can freely change the display-condition value through the input means (4, 5), and change the dot display range of the scattergram accordingly.

## Description

### FIELD OF THE INVENTION

The present invention relates to a display device for displaying a scattergram (also called scatter diagram, scatter plot, scatter plot graph and the like) showing the distribution state of the cells, particularly blood cells, a method of displaying the scattergram using the display device, and a blood analyzer composed of the display device.

### BACKGROUND OF THE INVENTION

Red blood cell, platelet and leukocyte, which are blood cells, vary differently reflecting the condition of the body.

For example, red blood cell mainly relates to the transport of oxygen, and the number thereof changes depending on the symptoms such as anemia, polycythemia and the like. In addition, changes in the morphology reflect various symptoms, for example, sickle-shaped (crescent-shaped) red blood cell means sickle cell anemia, compact red blood cell with an insufficient amount of hemoglobin means hypoferric anemia, large egg-shaped red blood cell means anemia due to the deficiency in folic acid or vitamin B12 (malignant anemia) and the like. Furthermore, reticulocyte increases and decreases reflecting the enhancement of or reduction in red blood cell production. For example, the reticulocyte number increases in the cases of hemolytic anemia, megaloblastic anemia, myelodysplastic syndrome and the like, whereas the reticulocyte number decreases in the cases of aplastic anemia, acute leukemia and the like.

Platelet contains blood coagulation factors and is mainly involved in hemostasis. The number thereof decreases in, for example, aplastic anemia.

Of the leukocytes, lymphocyte that is involved in the eradication of bacteria, virus and the like, antibody production and the like increases in number due to bacteria, virus infection and the like, and decreases in number due to malignant lymphoma, immunodeficiency syndrome, administration of anticancer agent, irradiation of radiation and the like. Also, of the leukocytes, monocyte increases due to bacterial infection, chronic myelomonocytic leukemia and the like; neutrophil decreases due to bacterial infection, administration of anticancer agent and the like; eosinophil increases due to allergic disease and the like; basophil increases due to chronic myeloid leukemia, thyroid gland disease and the like; and the like.

Furthermore, in acute leukemia, the ratio of the blood cells varies for each disease. For example, when red blood cell, platelet and neutrophil decrease and, of the leukocytes, blast cells to be granulocytes have cancerated and blast cells are present in not less than 3%, it is acute myeloid leukemia; and when lymphocytes have cancerated and blast cells are present in less than 3%, it is acute lymphocytic leukemia.

Therefore, the frequency distribution relating to the number, morphology, ratio and the like of the blood cells is an important measurement item for the diagnosis for medical care and the like.

One of the analysis methods relating to the above-mentioned blood cells is a leukocyte classification. Particularly, leukocyte classification display methods such as LMNE matrix and the like using various techniques such as staining technique, impedance method, optical technique and the like, can measure leukocytes to divide into 5 classifications, can display the classification results to enable visual evaluation, and is an important method for diagnosing various diseases reflected by different blood cell numbers, ratios and the like for each sample (e.g., leukemia, malignant lymphoma, multiple myeloma and the like) (e.g., JP-A-2000-329685).

LMNE matrix is one kind of scattergram relating to 4 kinds of leukocytes (namely, Lymphocyte (L), Monocyte (M), Neutrophil (N) and Eosinophil (E)), stained using a cell staining technique such as fat staining, peroxidase staining and the like.

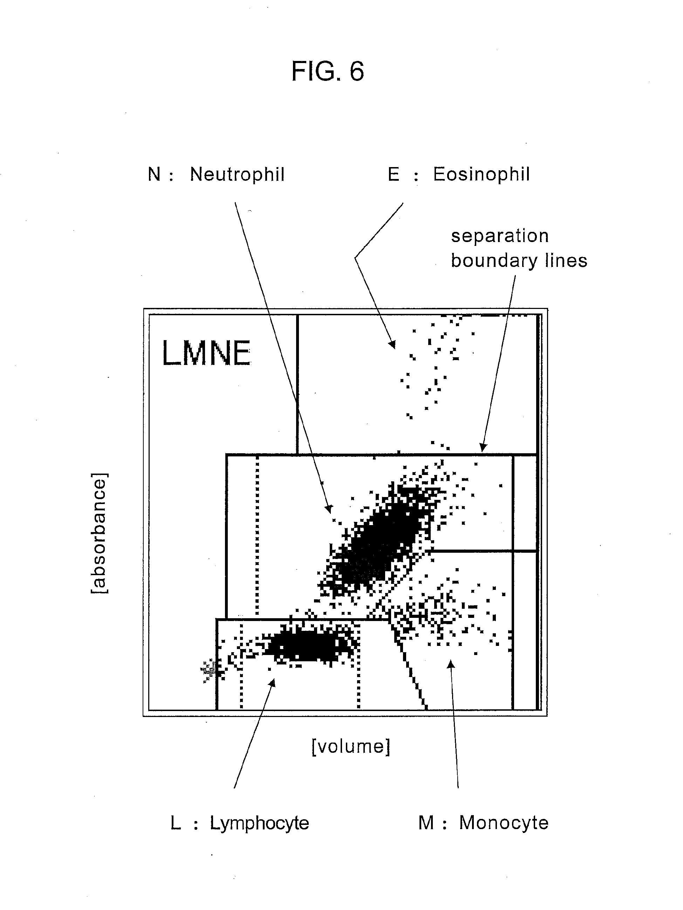

Fig. 6 shows a typical example display of LMNE matrix, which is a graph plotting the volume and absorbance (optical absorption property) of each blood cell in a sample mixture containing the aforementioned 4 kinds of blood cells, on the X-Y plane of X-axis (horizontal axis corresponding to volume) and Y-axis (vertical axis corresponding to absorbance).

Even when a sample contains a mixture of the above-mentioned 4 kinds of blood cells, by plotting the data pairs (volume, absorbance) of individual blood cells as LMNE matrix, the plotted dots are clearly separated into 4 groups corresponding to 4 kinds of blood cells, and distributed as shown in Fig. 6. Therefore, it is possible to know the above-mentioned various diseases from the distribution state of each group.

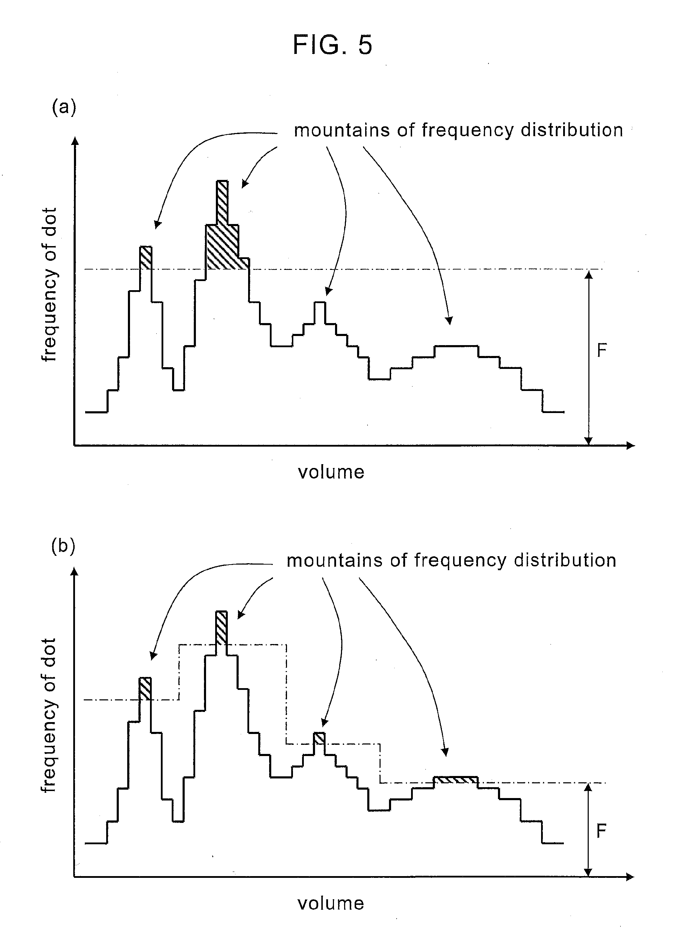

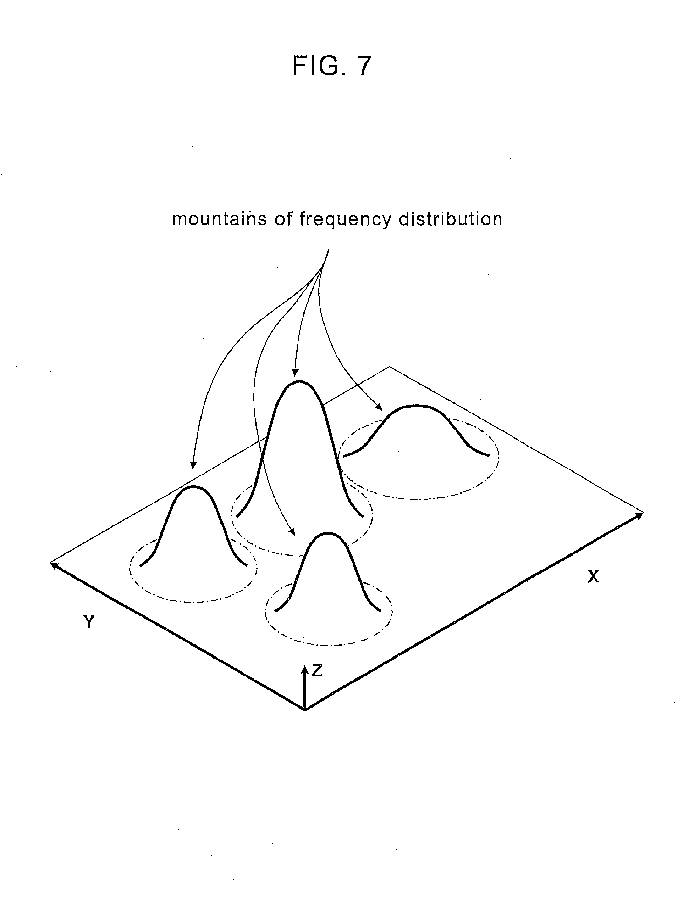

The distribution of 4 groups of dots appearing on the LMNE matrix is, as shown in Fig. 7 with three-dimensional images, the frequency distribution forms a mountain-like part (hereinafter "mountain") for each group, and the mountain of each frequency distribution has a top (a peak part having high frequency) specific to the kind of blood cell. However, Fig. 7 is an image for easy understanding of the mountains of frequency distribution, and does not show an actual frequency distribution. Although smooth mountains are depicted in Fig. 7, an actual mountain of frequency distribution is an assembly of bar-graphs forming a mountain, as shown in Fig. 5.

The main reason of the dot having a frequency is lower resolution of LMNE matrix coordinates relative to the number of measured data (volume and absorbance) for analysis. In other words, in an analysis data resolution necessary for achieving the requested blood cell measurement accuracy, plural blood cells enter a single minimum compartment and therefor, similar blood cell data are layered on one dot.

A conventional LMNE matrix as shown in Fig. 6 is a planar graph obtained when the three-dimensional frequency distribution as in Fig. 7 is seen from the above, and therefore, the frequency of each plotted dot does not appear on the graph. Therefor, even if the height of the mountain and coordinates of the top in each frequency distribution are calculated in the process of displaying the LMNE matrix, they cannot be expressed on the LMNE matrix. The present inventors have taken note of this point as a problem to be solved.

That is, even though conventional LMNE matrix is sufficiently useful for the diagnosis of the present condition in the medical care and the like since they permit easy view of the range of dispersion and sparse-dense manner, the results of data processing obtained from the blood samples are not sufficiently utilized, since they are planar.

Such problems are present in not only the LMNE matrix but also in any scattergram targeting various blood cells

When a scattergram relating to the blood cells is displayed three-dimensionally as in Fig. 7, a more complicated program (software) for display becomes necessary, and a display screen with high resolution becomes essential to clearly display the overlapping plural three-dimensional mountains, which increases the cost of the blood cell analyzer. In contrast, since a scattergram simply displays dispersion of dots in a plane, even a compact liquid crystal screen with rough pixel density, which is equipped to the analyzer, can show an overview of the distribution. In addition, three-dimensional display is associated with a specific problem in that the state of an inclined plane (slope) on the back side (opposite side from inclined plane appearing on the screen) of the mountain of each frequency distribution, the state of a back mountain hiding behind a front mountain and the like cannot be known sufficiently. When a solid figure in the screen is rotated to enable observation of the back side of the mountain to solve the problem, a more complicated software becomes necessary, which increases the cost of the analyzer.

As mentioned above, when a scattergram relating to the blood cells is three-dimensionally displayed, various advantages provided by the scattergram are lost.

An object of the present invention is to solve the aforementioned problems and provide a display device for scattergram and a display method for scattergram, capable of more sufficiently utilizing the processed results of the data obtained from a blood sample without impairing the advantages of the conventional scattergram relating to blood cells, and a blood analyzer composed of the display device.

### SUMMARY OF THE INVENTION

The main constitution of the present invention capable of achieving the above-mentioned object is as follows.
(1) A display device for displaying a scattergram relating to blood cells, comprising at least a data processor and a display, wherein
   the data processor is configured to:
   use a dot-data set obtained by processing measured data of blood cells, the dot-data set being processed to be displayed as a scattergram;
   determine a display-condition range corresponding to the range between the lowest frequency and the highest frequency of respective frequencies of dots in the dot-data set;
   receive a display-condition value, which is selected from the display-condition range and input by a user via an input means; and
   display dot(s) having a frequency not less than a frequency corresponding to the received display-condition value, as a scattergram on the display.
(2) The display device of the above-mentioned (1),
   wherein the input means comprises:
   a mouse or a coordinates input device other than the mouse, which is connected to the data processor; and
   a track bar displayed on the screen of a display, and
   wherein the display device is configured such that,
   when a position of slider knob in the track-bar is moved due to an operation of the mouse or the coordinate input device by the user to determine the display-condition value, a dot having a frequency not less than a frequency corresponding to the position of slider knob in the track bar is displayed on the display as a scattergram.
(3) The display device of the above-mentioned (1),
   wherein the input means comprises:
   switch(es) assigned to predetermined key(s) on a keyboard connected to the data processor, or
   dedicated external switch(es) connected to the data processor, and
   wherein the display device is configured such that,
   when the display-condition value is changed and is determined by an operation of the switch(es) on the keyboard or the external switch(es) by a user, a dot having a frequency not less than a frequency corresponding to the determined display-condition value is displayed on the display as a scattergram.
(4) The display device of the above-mentioned (3),
   wherein the input means further comprises a track bar displayed on a screen of the display, and
   wherein the display device is configured such that
   a slider knob of the track bar moves in conjunction with an operation of the switch(es) on the keyboard or the external switch(es) by a user.
(5) A blood analyzer comprising the display device of any of the above-mentioned (1) - (4), wherein the blood analyzer further comprises at least a blood-analysis-data-processor and a blood-analysis-results-display,
   wherein the blood-analysis-data-processor is configured to:
   perform measurement(s) and analysis(es) of a provided blood sample for the predetermined analysis items, and display the results of the measurement(s) and analysis(es) on the blood-analysis-results-display, and
   wherein the data processor of the display device is incorporated as a part of the blood-analysis-data-processor, and the display of the display device also functions as the blood analysis-results-display.
(6) The blood analyzer of the above-mentioned (5),
   wherein the blood analyzer further comprises a blood cell counter function to measure and give the measured results of predetermined blood cells in the provided blood sample for predetermined items, and
   wherein the blood-analysis-data-processor has a function to form, from the data of the measured results of the blood cells in the provided blood sample, a dot-data set to display a scattergram on the display device.
(7) A method of displaying a scattergram relating to blood cells using the display device of any of the above-mentioned (1) - (4), the method comprising:
   a range determination step of
   using a dot-data set obtained by processing the measured-data of blood cells, the processing is so performed as to display the dot-data set as a scattergram, and
   determining a display-condition range corresponding to the range between the lowest frequency and the highest frequency of respective frequencies of dots in the dot-data set, by the data processor of the display device;
   a display-condition value receiving step of
      receiving a display-condition value by the data processor as an input, wherein the display-condition value is selected by a user from the display-condition range determined in the range determination step, and is input via an input means;
   a displaying step of
      displaying dot(s) having a frequency not less than a frequency corresponding to the display-condition value received as the input in the display-condition value receiving step, as a scattergram on the display, by the data processor of the display device.

### BRIEF DESCRIPTION OF THE DRAWINGS

Fig. 1 shows the configuration of the display device or blood analyzer of the present invention.
Fig. 2 shows other configuration of the display device or blood analyzer of the present invention.
Fig. 3 shows changes in the dots of the frequency-variable LMNE matrix displayed by the display method and display device of the present invention.
Fig. 4 is a schematic showing of the frequency of (volume of blood cell, absorbance of blood cell) data set corresponding to the dots on a scattergram of the display screen. In the Figure, the data set is shown as 5 x 5 matrix. In fact, however, the data of (volume of blood cell, absorbance, frequency of blood cell) are stored in the number corresponding to the resolution and in the form of matrix data in response to the computer program.
Fig. 5 shows images of, in display method and display device of the present invention, display-condition value F, which is changed by the user, and the mountains of frequency distribution for each blood cell displayed thereby.
Fig. 6 shows a typical display of conventional LMNE matrix.
Fig. 7 is a three-dimensional drawing for easy showing of the frequency of each dot shown in LMNE matrix. The height of the mountain of each frequency distribution formed by 4 groups of blood cells (frequency of each plot) is a value in the Z-axis direction perpendicular to the X-Y plane.

### DETAILED DESCRIPTION OF THE INVENTION

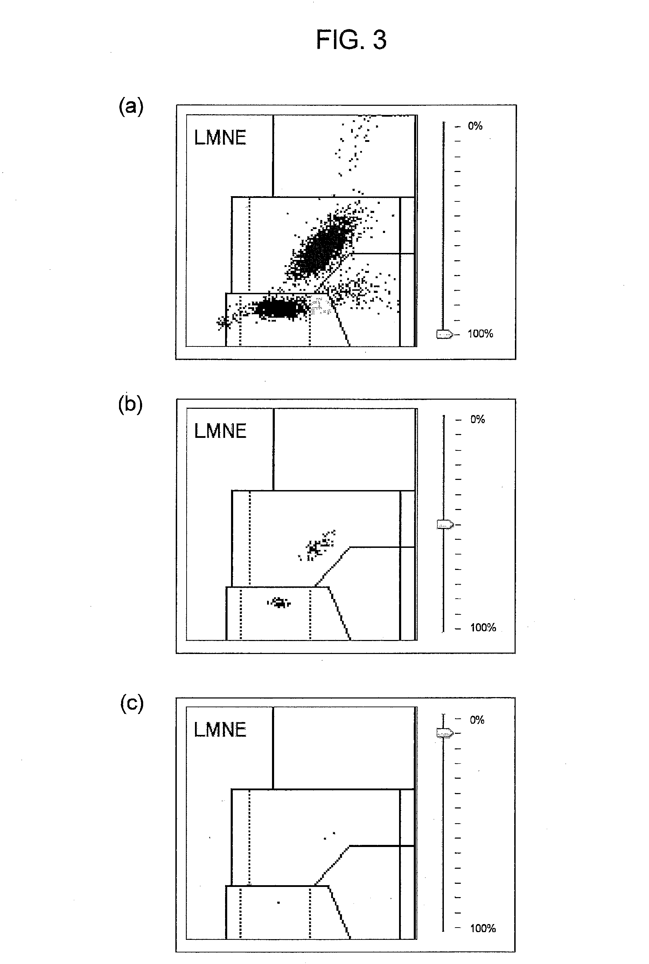

In the display device and display method of the present invention, blood cell measured data are shown as plots in a planar scattergram similar to the conventional ones. Therefore, the advantages of the conventional scattergram can be maintained, for example, the distribution manner can be shown even when a small screen with low resolution is used, a complicated program is not necessary, and the like. Moreover, the user can freely change the display range of dots by a simple input operation. For example, the display range can be changed from a state displaying all dots (conventional scattergram display state) as shown in Fig. 3(a), through an intermediate state shown in Fig. 3(b), to a state displaying only the dots having high frequency as shown in Fig. 3(c) (only mountain top of frequency distribution is shown), as if the sea level is changed to show only the mountain top appearing above the sea level.

As a result, the position of mountain top of frequency distribution conventionally unutilizable since it is not shown in the scattergram can be easily observed, and the position of the top can be utilized as a new reference value for physical examinations and diagnoses of various diseases. Moreover, time-course observation of positional shift of the mountain top of the frequency distribution of each blood cell enables utilization of the positional shift of the mountain top as a further reference value for the aforementioned diagnoses.

For example, observation of a left-ward shift of the mountain top of frequency distribution of neutrophil on LMNE matrix may contribute to the screening for infections.

Therefore, a blood analyzer comprising the display device of the present invention becomes a more useful analyzer for physical examination and diagnoses of various diseases.

The embodiments of the display device and blood analyzer of the present invention are specifically explained in the following by way of Examples, and the display method of the present invention using the display device is specifically explained below.

In the present invention, the "scattergram relating to blood cells" is a graph wherein the analysis target blood cells are measured for the two measurement items to be the values for X-axis and Y-axis, and then the measured data (measured data of item for X-axis, and measured data of item for Y-axis) obtained for individual blood cells are plotted on the X-Y plane of the object scattergram.

In the following explanation, the [scattergram wherein frequency to be displayed can be freely changed by the user] of the present invention is also referred to as a "frequency-variable scattergram", or an "object scattergram" for the distinction thereof from the conventional scattergrams.

In the object scattergram, a combination of the measurement item to be shown on one axis and the measurement item to be shown on the other axis, (X-axis measurement item, Y-axis measurement item), is not particularly limited and, similar to conventional scattergram, for example, (volume of blood cell, absorbance of blood cell (or light transmission)) such as LMNE matrix, (volume of blood cell, fluorescence of blood cell), (forward-scattered light, fluorescence of blood cell), (side-scattered light, fluorescence of blood cell) and the like are useful.

Examples of the blood cells to be displayed as the object scattergram include, similar to conventional scattergram, red blood cells (including proerythroblast which is a premature stage of red blood cell, basophillic erythroblast, polychromatic erythroblast, orthochromatic erythroblast, reticulocyte, abnormal forms thereof), platelet (including abnormal forms such as large platelet, giant platelet and the like), and leukocyte (including neutrophil, eosinophil, basophil, lymphocyte, monocyte, atypical lymphocyte, abnormal lymphocyte, large lymphocyte, juvenile cell and the like). Of these, lymphocyte, monocyte, neutrophil, and eosinophil displayed on LMNE matrix are important blood cells for the diagnoses of infections and blood diseases.

A set of measured data (measured data of X-axis item and measured data of Y-axis item) obtained for the analysis target blood cells comprise a set of numerical values output by an electric, or optical measuring device. Therefore, they are converted according to each scale of the X-axis and Y-axis to give a dot-data set, so that they can be plotted on the X-Y plane of the object scattergram.

By this processing, the measured data of many blood cells are layered as respective dots on the same, respective coordinates, individual dot data have a frequency (layered number) such as (X coordinate value, Y coordinate value, frequency), thus resulting in a mountain of frequency distribution formed as in Fig. 7.

It is not always necessary to separately complete the dot-data set as an independent data set {(X coordinate value, Y coordinate value, frequency) set} before display on the object scattergram. Respective measured data (measured data of X-axis item, measured data of Y-axis item) may be plotted on a scattergram while converting to the coordinate data of the dot (X-axis value, Y-axis value). However, in such case, it is still necessary to obtain frequency (layered number) for each dot to change the display range of dots in a frequency-variable scattergram. Therefore, a dot-data set {(X coordinate value, Y coordinate value, frequency) set}, or data relating to the frequency of each coordinate capable of constructing the data set only need to be present. In the present specification, the combination of the data of each coordinate value and the data of the frequency of the coordinate is referred to as a dot-data set. While the dot-data set preferably indicates collectively the data of X coordinate value and the data of Y coordinate value and frequency as one set of data, they may be recorded individually while maintaining the relationship with each other, and the form of the recorded data may be any.

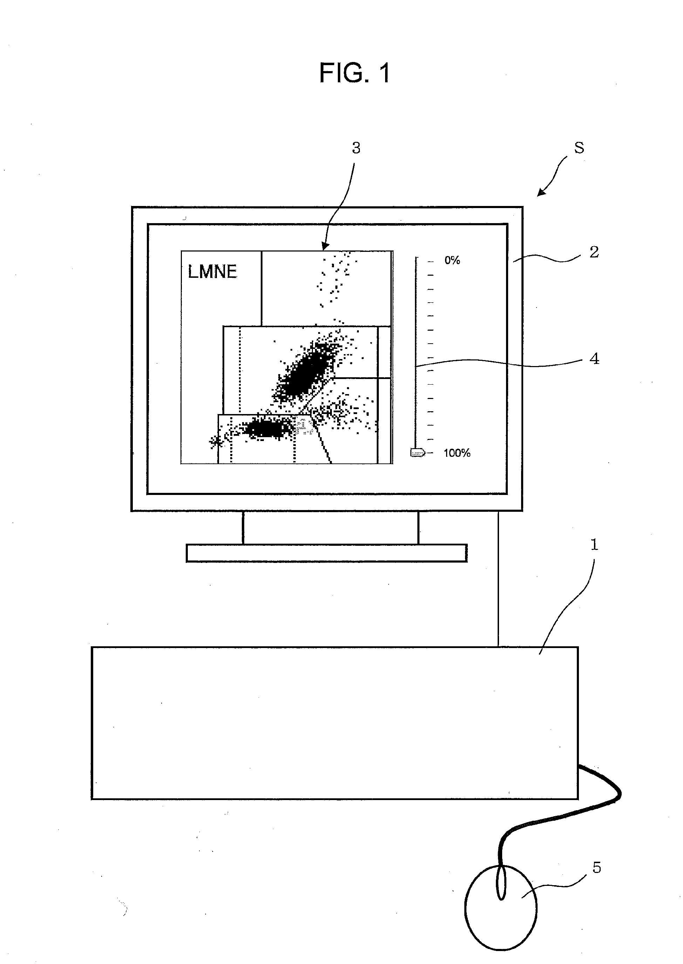

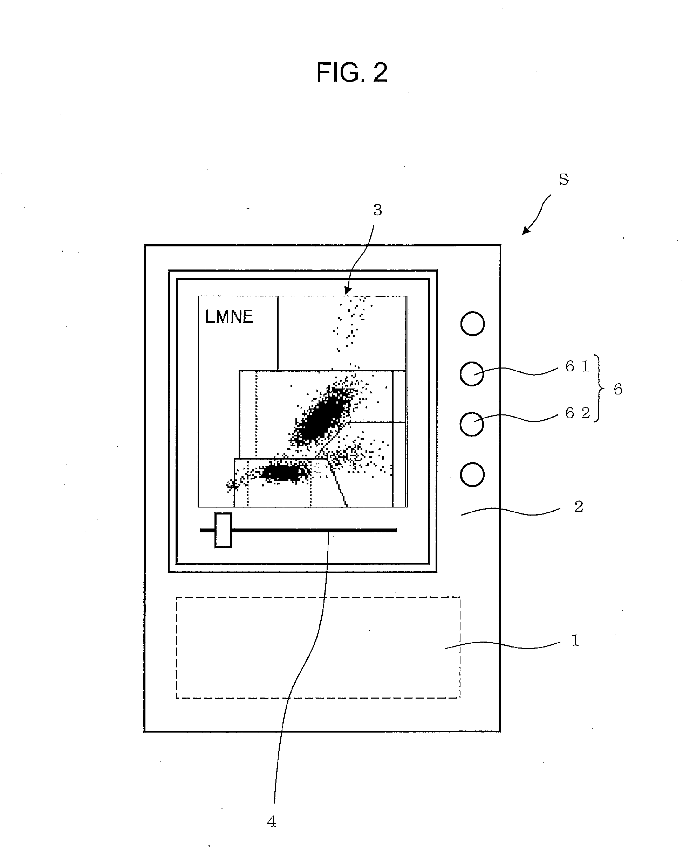

As shown in the device configurations of Fig. 1, Fig. 2, the display device S of the present invention has at least a data processor 1 and a display 2. The devices of Fig. 1, Fig. 2 are also the blood analyzer of the present invention containing the display device of the present invention. In this case, the data processor 1 is a part of the blood-analysis-data-processor, and the display 2 is also a blood-analysis-results-display.

While the data processor 1 or blood-analysis-data-processor may be composed only of electronic circuit and electric parts to allow data processing, an embodiment of a constitution using a computer (e.g., CPU, memory and the like are mounted on one circuit substrate and the like) and a program to be executed by the computer (e.g., program for execution by the computer, for processing of dot-data set, processing of display-condition value input by the user, and output to a display) is preferable. Prior Art may be referred to as for the connection and communication between the computer and the external device.

In the embodiment of Fig. 1, a data processor 1 and a display 2 are different devices, which are connected with each other to enable display of image signals output from the data processor 1 to the display 2 as images.

The data processor 1 may be a single device such as single computer and the like (device for only processing the given data set so that it can be displayed as an object scattergram). A preferable embodiment is a part of the blood-analysis-data-processor in the blood analyzer of the present invention, which performs processing of the blood cell measured data, management thereof, conversion to dot-data set to be displayed as a scattergram, processing of the data set to be displayed as an object scattergram and the like. The items to be analyzed by the blood analyzer, the blood cells to be classified and the like only need to be in accordance with the desired analysis, and the constitution, mechanism, program and the like for the measurement and analysis thereof may be known techniques.

In the embodiment of Fig. 2, the data processor 1 and the display 2 integrally form a display device S, wherein the data processor 1 is contained within display device S as shown with a broken line. Also in the embodiment of Fig. 2, the display device S of the present invention may be an apparatus that displays the given data set as a scattergram, and at least practices the present invention, or may be a blood analyzer that has the display 2 as a blood-analysis-results-display and performs from the analysis of the blood cell to a display output thereof.

The display may simultaneously display not only the object scattergram but also various blood analysis results, information to be displayed and the like, in accordance with the space of the display screen.

In the present invention, the size of the display device, integral constitution of a blood analyzer, constitution enabling data transmission and the like may be freely determined. For example, it may be a tablet terminal composed to: communicate with a computer having a database relating to the measured data, other blood cell counting apparatus or a blood analyzer; load a blood cell measured data set or a dot-data set and display same as a frequency-variable display scattergram; and permit a user to freely change the display range of dots by an operation of a touch panel screen such as track bar and the like or a switch.

The data processor is composed to determine the frequency of each dot contained in the given dot-data set (which may be formed by the device by processing the obtained measured data set); find out the lowest frequency and the highest frequency, obtain the range defined by the lowest frequency as the lower limit and the highest frequency as the upper limit; and determine the display-condition range corresponding to such range.

In this case, the lowest actual frequency fₘᵢₙ and the highest actual frequency fₘₐₓ are directly used as the lower limit and the upper limit, respectively, and the display-condition range fₘᵢₙ - fₘₐₓ may be adopted. Alternatively, the frequency range may be set as a display-condition range by allocating a suitable small range such as "1 - 10", "1 - 100", "0 - 255" and the like.

The determined display-condition range may be a variable for inside use in processing to change the displaying of the object scattergram by the data processor, or may be directly indicated on the display and used as an adjustable range by the user.

Irrespective of the value of the lowest actual frequency fₘᵢₙ, the lowest frequency may be always set to a particularly small value such as "1" and the like (or the lower limit of the display-condition range may be set to a particular value corresponding to the particularly small number), thereby omitting the processing for searching the lowest actual frequency fₘᵢₙ or processing for determining the lower limit of the display-condition range.

It is preferable to display all the dots to be displayed on the object scattergram at the lower limit (smallest frequency side) of the display-condition range (this state is the same as the conventional scattergram).

On the other hand, at the upper limit (highest frequency side) of the display-condition range, only the dot having the maximum frequency may be indicated, or nothing may be indicated by setting a frequency higher than the maximum frequency as the upper limit. This may be appropriately selected depending on the impression of the screen change for the user.

How small the display-condition range is to be divided for the selection of the display conditions can be appropriately determined in consideration of the demand of the user, operability, processing performance of the data processor and the like. When showing the position of the mountain top of frequency distribution is solely important, the range may be divided into only two steps: a step of showing the entire dot and a step of showing only the dot of the mountain top of frequency distribution.

A preferable example for determining the display-condition range is the following processing. In the Example, the dot-data set is (volume of blood cell, absorbance of blood cell), and a model displayed on a simple square coarse screen is shown for explanation in the Figure, which are not to be construed as limitative.

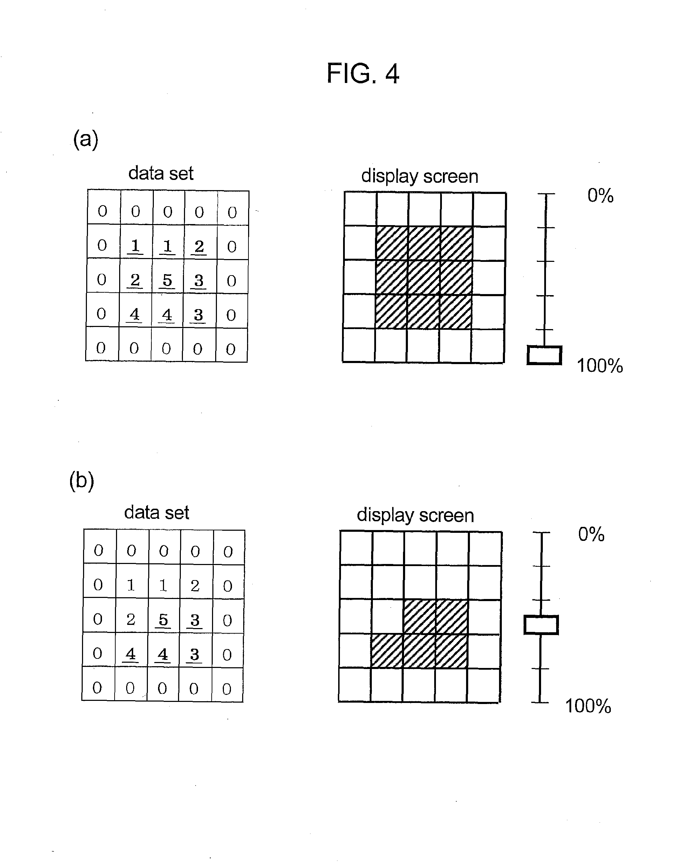

The measured data (set of (volume of blood cell, absorbance of blood cell) data output from the measuring apparatus) are divided into an N x N matrix data set (=dot-data set) according to the dot number of the object X-Y plane of the scattergram. At this time, as shown in Fig. 4 as a model, each element of the matrix of the data set receives a frequency.

A display-condition range (1 - 5 in the example of Fig. 4) corresponding to the frequency range of the data set is determined and shown as a variable range on the screen to be operated on by the user. The example of Fig. 4 has a scale of six stages, i.e., five stages of 1 - 5 added with "6th stage", and when a user sets a track bar slider knob to "6", a dot is not displayed due to the absence of a dot corresponding to [frequency 6 or above].

In Fig. 4(a), a user operates the track bar to select 100% (i.e., frequency 1), and the display screen shows dots of frequency 1 or more, i.e., all dots.

In Fig. 4(b), a user operates the track bar to select 60% (i.e., frequency 3), and the display screen shows dots of frequency 3 or more (underlined frequencies in the data set shown in Fig. 4(b)).

The data processor is composed such that the user can input a display-condition value contained in the above-mentioned display-condition range via an input means. The data processor has a display-condition value receiving part that receives the aforementioned display-condition value input by the user as an input.

The input means may be any as long as it can input a display-condition value into the data processor and may be, for example, an embodiment wherein a display-condition value is input as a number from the keyboard of a computer. For convenience of input by a user, in a preferable embodiment, an image in the screen of a display is operated using a coordinate input device such as a simple dedicated switch, mouse, touch panel, pen input tablet and the like, and a display-condition value from the input range is input.

Of such embodiments, an example permitting intuitive quick operation is an embodiment shown in Fig. 1, wherein the scattergram 3 as well as a track bar (also called a slider) 4 are displayed on the screen of the display 2. In this embodiment, a user operates a coordinate input device 5 such as a mouse and the like to move the position of the slider knob of track bar 4, and the data processor receives a display-condition value corresponding to the position of the slider knob of the track bar 4 as an input value of the user.

The design of the above-mentioned track bar may be, in addition to the one shown in Fig. 1, a design similar to various slide switches actually used for operation panels. It may have an appropriate scale to facilitate operation by users.

The above-mentioned track bar may indicate on both ends a number such as "0%", "100%" and the like to be a reference of the operation amount. In addition, the track bar may additionally indicate a number showing the position of the slider knob on the screen, which may change along with the movement of the slider knob.

The above-mentioned track bar may be displayed in consideration of the operability and margin of the screen, such as the embodiment of Fig. 1 wherein it is placed vertically on the lateral side of the scattergram, or the embodiment of Fig. 2 wherein it is placed horizontally on the lower side of the scattergram and the like.

The operation of the above-mentioned track bar may be an operation moving the slider knob by a mouse and a pointer on the screen, an operation using other various coordinate input device (operation to touch and move the slider knob of the track bar on the screen by a touch panel, operation to move the slider knob by a pen-tablet and a pointer on the screen), operation by a wheel of a mouse, suitable key on the keyboard (for example, up and down arrow keys and the like), an external switch 6 such as the dedicated operation button (61, 62) shown in Fig. 2 and the like, and the like.

Any variable input means such as a circular dial, lever and the like may be shown on the screen in place of the above-mentioned track bar.

The input means may be an embodiment of an operation, without displaying the track bar on the screen, of only an external switch 6 to variably input a display-condition value, for example, a switch assigned to a predetermined key on a keyboard connected to the data processor, the dedicated operation button (61, 62) shown in Fig. 2, or the manner of contact of a finger tip in a particular direction with the touch panel and the like.

In the present invention, since a frequency-variable scattergram is displayed on the display, the user can judge based on the changes in the scattergram whether the frequency is maximum or minimum, and whether the dots to be displayed are being increased or decreased.

For example, with a constitution wherein pressing one of one pair of up and down external switches once changes the frequency of the displayed dot only by a given amount to change the display of the scattergram and the auxiliary number, the user can operate the external switch while watching the changes on the frequency-variable scattergram and auxiliary number, thereby changing the frequency range of the displayed dot to a desired range. Such embodiment is useful for a compact screen with less space for providing a track bar.

The data processor has a dot extraction part. The dot extraction part is composed to search for a dot having a frequency not less than a frequency corresponding to the received display-condition value from the dot-data set.

Furthermore, the data processor has a display control part. The display control part is composed to receive the data of the dot found by the dot extraction part, and display the dot on the predetermined coordinates of the scattergram displayed on the screen of the display. The configuration of the basic device and the program itself for displaying the image on a screen of the display can be found in the Prior Art.

When a user operates an input means such as track bar and the like, the data processor may receive the display-condition value at any time that changes every moment due to the operation of the user, and change every moment the range of the dot to be displayed on the object scattergram or, upon recognition of the cease of the operation of the user, display the display-condition value at that time point as a dot input value on the object scattergram. These embodiments may be appropriately determined according to the processing performance, data collection interval and the like of the data processor.

As mentioned above, when the display-condition value is determined by an operation of an input means by a user such as transfer of the grip position of the track bar, operation of an external switch and the like, and then the display-condition value receiving part of the data processor receives the value as an input, the dot extraction part of the data processor searches for a dot having a frequency not less than a frequency corresponding to the received display-condition value from the dot-data set, and the display control part that receives the dot satisfying the conditions displays the dot on the display as a scattergram.

Fig. 5(a) shows an image of display-condition value F changed by a user and the mountains (peaks) of frequency distribution for each blood cell displayed thereby. This Figure is a histogram showing the volume of blood cell on the horizontal axis (different from actual frequency distribution), and 4 mountains showing the frequency distribution of 4 kinds of blood cells. Only a dot satisfying display-condition value F changed by a user (hatched part in Fig. 5(a)) is displayed on the X-Y plane of the scattergram.

With the above-mentioned constitution, as stated in the Effect of the Invention, for example, the range of the dot to be displayed on the object scattergram can be changed freely, from the display of all dots as shown in Fig. 2(a), to the display of only the dot near the mountain top of frequency distribution as shown in Fig. 2(c), by an operation of the input means by a user.

Fig. 5(b) shows an aspect of a histogram similar to that of Fig. 5(a). In the embodiment of Fig. 5(b), a display-condition range corresponding to the range between the lowest frequency and the highest frequency is set for each of the four mountains of the frequency distribution according to the height of the mountains. When a user changes the display-condition value F by one input means, the value is converted to respective frequencies according to respective mountains, and each dot having a frequency not less than the frequency for each mountain is displayed on the scattergram. For example, when a user determines the display-condition value F to a middle value by one input means, the value is converted to each middle frequency for each mountain, and dots having a frequency not less than the middle frequency are displayed on the scattergram for all mountains, though each mountain has a different height. In such embodiment, even when plural blood cells are distributed on a scattergram, the top of respective groups can be simultaneously shown on the screen by one operation.

In the present invention, a dot having a frequency not less than a frequency corresponding to the input display-condition value is displayed in an attempt to know the mountain top of frequency distribution. Furthermore, it is possible to display only a dot having a frequency corresponding to the input display-condition value, or display a dot having a frequency not more than a frequency corresponding to the input display-condition value.

In the case where the display device of the present invention is a blood analyzer that performs from hematological analysis (for example, classification of blood cells) to output display, an actual example of main processing enabling plotting of the given blood sample on an LMNE matrix is as follows.

The given blood sample is subjected to a necessary cell staining processing such as fat staining, peroxidase staining and the like to give a sample solution permitting measurement of the above-mentioned 4 kinds of blood cells.

The individual blood cells in the sample solution are measured for the volume of individual blood cells by a light-focused flow impedance method, and the absorbance volume of the blood cells is measured almost simultaneously by an optical absorption method to give the measured data (volume xᵢ, absorbance yᵢ) of each blood cell, wherein i is the number 1, 2, 3,..., n of respective measured data.

The obtained measured data set is converted to correspond to the scale of X-axis, Y-axis, so that it can be plotted on the X-Y plane of the object LMNE matrix, whereby a dot-data set is obtained.

The data set is plotted on the volume-absorbance plane of the LMNE matrix.

Moreover, as in the conventional example of Fig. 6, separation boundary lines are drawn to show the boundaries of the distribution of 4 kinds of blood cells.

The scattergram display method of the present invention is practiced using the display device of the present invention and comprises at least the following steps.
(A) A range determination step for determining the display-condition range, which is stated in the explanation on the display device, by a data processor.
   In the range determination step, using a dot-data set processed to be able to display blood cell measured data as a scattergram, a display-condition range corresponding to the range between the lowest frequency and the highest frequency is determined, by a data processor, in respective frequencies of dots in the dot-data set.
(B) A display-condition value receiving step, wherein the display-condition value determined in the aforementioned range determination step is received, by a display-condition value receiving part of the data processor, as an input from a user through an input means.
   In the display-condition value receiving step, an input means, which is stated in the explanation on the display device, is operated by a user, and the display-condition value is received as an input within the display-condition range.
(C) A displaying step, wherein dot(s) having a frequency not less than a frequency corresponding to the received display-condition value is (are) displayed. The received display-condition value is received as an input in the aforementioned display-condition value receiving step, as a scattergram on the display by the data processor.
   By performing the above-mentioned steps using the display device of the present invention or a blood analyzer composed using the same, the user can operate an input means such as a mouse and the like connected to the data processor, and change the display-condition value by a simple operation such as change of the position of a track bar on the screen of the display and the like and, along with the change in the display-condition value, can change the range of the dot to be displayed as a scattergram in the display.

In the display device of the present invention, when a computer is used as a data processor, the program to be executed by the computer makes
the computer perform the above-mentioned (A) range determination step,
the computer perform the above-mentioned (B) display-condition value receiving step, and receive a display-condition value input by a user, and
the computer perform the above-mentioned (C) displaying step.

According to the present invention, users such as doctors, clinical laboratory technicians, and the like can easily display the mountain top of frequency distribution, while maintaining the advantages of the conventional scattergram relating to blood cells. Consequently, conventional scattergrams can be more effectively utilized for diagnosis and the like.

In addition, when the coordinate(s) of the mountain top(s) of frequency distribution shown in a scattergram by the present invention are recorded for each blood test, changes in the coordinate(s) of the mountain top(s) of frequency distribution can also be shown, which can be a reference material for determining the time-course changes of the physical conditions.

## Claims

1. A display device for displaying a scattergram relating to blood cells, comprising at least a data processor and a display, wherein
the data processor is configured to:
use a dot-data set obtained by processing measured data of blood cells, the dot-data set being processed to be displayed as a scattergram;
determine a display-condition range corresponding to the range between the lowest frequency and the highest frequency of respective frequencies of dots in the dot-data set;
receive a display-condition value, which is selected from the display-condition range and input by a user via an input means; and
display dot(s) having a frequency not less than a frequency corresponding to the received display-condition value, as a scattergram on the display.

2. The display device of claim 1,
wherein the input means comprises:
a mouse or a coordinates input device other than the mouse, which is connected to the data processor; and
a track bar displayed on the screen of a display, and
wherein the display device is configured such that,
when a position of slider knob in the track-bar is moved due to an operation of the mouse or the coordinate input device by the user to determine the display-condition value, a dot having a frequency not less than a frequency corresponding to the position of slider knob in the track bar is displayed on the display as a scattergram.

3. The display device of claim 1,
wherein the input means comprises:
switch(es) assigned to predetermined key(s) on a keyboard connected to the data processor, or
dedicated external switch(es) connected to the data processor, and
wherein the display device is configured such that,
when the display-condition value is changed and is determined by an operation of the switch(es) on the keyboard or the external switch(es) by a user, a dot having a frequency not less than a frequency corresponding to the determined display-condition value is displayed on the display as a scattergram.

4. The display device of claim 3,
wherein the input means further comprises a track bar displayed on a screen of the display, and
wherein the display device is configured such that
a slider knob of the track bar moves in conjunction with an operation of the switch(es) on the keyboard or the external switch(es) by a user.

5. A blood analyzer comprising the display device of any of claims 1-4, wherein the blood analyzer further comprises at least a blood-analysis-data-processor and a blood-analysis-results-display,
wherein the blood-analysis-data-processor is configured to:
perform measurement(s) and analysis(es) of a provided blood sample for the predetermined analysis items, and display the results of the measurement(s) and analysis(es) on the blood-analysis-results-display, and
wherein the data processor of the display device is incorporated as a part of the blood-analysis-data-processor, and the display of the display device also functions as the blood analysis-results-display.

6. The blood analyzer of claim 5,
wherein the blood analyzer further comprises a blood cell counter function to measure and give the measured results of predetermined blood cells in the provided blood sample for predetermined items, and
wherein the blood-analysis-data-processor has a function to form, from the data of the measured results of the blood cells in the provided blood sample, a dot-data set to display a scattergram on the display device.

7. A method of displaying a scattergram relating to blood cells using the display device of any of claims 1-4, the method comprising:
a range determination step of
using a dot-data set obtained by processing the measured-data of blood cells, the processing is so performed as to display the dot-data set as a scattergram, and
determining a display-condition range corresponding to the range between the lowest frequency and the highest frequency of respective frequencies of dots in the dot-data set, by the data processor of the display device;
a display-condition value receiving step of
receiving a display-condition value by the data processor as an input, wherein the display-condition value is selected by a user from the display-condition range determined in the range determination step, and is input via an input means;
a displaying step of
displaying dot(s) having a frequency not less than a frequency corresponding to the display-condition value received as the input in the display-condition value receiving step, as a scattergram on the display, by the data processor of the display device.
